# EUROPÄISCHE PATENTSCHRIFT

(11) **EP 3 168 025 B1**
(45) Veröffentlichungstag und Bekanntmachung des Hinweises auf die Patenterteilung: **26.08.2020**
(21) Anmeldenummer: 16002080.6
(22) Anmeldetag: 27.09.2016
(51) Int. Cl.: B29C 45/14, B29C 45/26

(54) **SPRITZGIESSFORMWERKZEUG ZUR HERSTELLUNG VON VERBUNDDICHTUNGSELEMENTEN**
INJECTION MOULD FOR PRODUCTION OF COMPOUND SEALED ELEMENTS
OUTIL DE MOULAGE PAR INJECTION DESTINÉ À LA FABRICATION D'ÉLÉMENTS D'ÉTANCHÉITÉ COMPOSITES

(30) Priorität: 13.11.2015 DE 102015119612
(43) Veröffentlichungstag der Anmeldung: 17.05.2017
(73) Patentinhaber: CQLT SaarGummi Technologies S.à.r.l., 5544 Remich (LU)
(72) Erfinder: Samanci, Suleyman, D-66687 Wadern (DE)
(74) Vertreter: Patentanwälte Bernhardt / Wolff Partnerschaft mbB

(56) Entgegenhaltungen:
- EP-A1- 1 995 101
- DE-A1-102011 075 871
- US-A- 5 395 579
- US-A1- 2004 247 827
- US-A1- 2011 057 353
- US-A1- 2012 023 829

## Beschreibung

Die Erfindung betrifft ein Formwerkzeug zur Herstellung von Verbunddichtungselementen unter Anspritzung eines Dichtungsformteils an einen extrudierten Dichtungsstrangabschnitt, mit einem Formraum und wenigstens einem in den Formraum mündenden Öffnungskanal, in den ein Endbereich des extrudierten Dichtungsstrangabschnitts unter Schließung des Formraums einsetzbar ist, und mit Einrichtungen zur Klemmfixierung des Dichtungsstrangabschnitts.

Verbunddichtungselemente, die sowohl extrudierte als auch spritzgegossene Elastomer- oder/und Thermoplastteile umfassen, werden z.B. zur Bildung von Dichtungen an Fahrzeugkarosserien eingesetzt. Spritzgegossene Formteile der Verbunddichtungselemente kommen dabei insbesondere an Stellen zur Anordnung, wo ein für die Verlegung extrudierter Dichtungsstränge zu enger Biegeradius erforderlich wäre.

In dem obengenannten Formwerkzeug wird der Formraum für das Dichtungsformteil unter anderem durch die Endstirnfläche des in den Öffnungskanal eingeführten extrudierten Dichtungsstrangabschnitts begrenzt. Die Maßhaltigkeit des gespritzten Formteils hängt somit von einer genauen Positionierung der Endstirnfläche innerhalb des Formwerkzeugs ab.

Durch Schwankungen der Querschnittsabmessungen des extrudierten Dichtungsstrangs kann der Endbereich des extrudierten Dichtungsstrangs in dem Öffnungskanal unterschiedlich fest verklemmt sein oder sogar ein Spiel aufweisen. Indem die Endstirnfläche des extrudierten Dichtungsstrangs dem Spritzdruck im Formraum nachgibt, wird trotz Fixierung des extrudierten Dichtungsstrangabschnitts (außerhalb des Werkzeugs) die Maßhaltigkeit des gespritzten Formteils beeinträchtigt. Beeinträchtigt ist auch das Aussehen des Übergangs zwischen dem extrudierten Dichtungsstrang und dem an dessen Endstirnfläche angespritzten Formteil.

Aus US 2012/023829 A1 geht ein Formwerkzeug hervor, das Halteteile für die Bildung von Öffnungskanälen zum Einführen eines Dichtungsprofils aufweist, wobei die Halteteile aus unterschiedlich geformten Blöcken zusammengesetzt sind, welche dem Öffnungsquerschnitt des Öffnungskanals entsprechende Konturen aufweisen.

Die US 5,395,579 A beschreibt ein Formwerkzeug zum Anspritzen eines Eckenteils eines Verbunddichtungselements an einen extrudierten Dichtungsstrangabschnitt, wobei ein in einen Öffnungskanal einsetzbarer Endbereich des Dichtungsstrangabschnitts mit einem die Anhaftung des angespritzten Materials sichernden Verbindungsstück versehen ist.

Eine Anordnung der eingangs genannten Art geht aus EP 1 995 101 A1 hervor. Eine metallische Gießform zum Verbinden von Endbereichen von Dichtungsstrangabschnitten ist in eine Vorrichtung einsetzbar, in welcher die durch ein anzugießendes Formteil zu verbindenden Dichtungsstrangabschnitte durch Klemmbackenelemente fixierbar sind. Die US 2011 057 353 zeigt ein Einlegeteil, dass in eine Werkzeugkavität hineinragt und dort -nach Schließen der Werkzeughälften- teilweise umspritzt werden soll. Damit das Werkzeug, sprich das Einlegeteil im Öffungskanal abgedichtet wird, sind weiche/kompressible Werkzeugeinsätze in der Kanalwand vorgesehen, die das Einlegeteil teilweise umschließen und die Kavität abdichten. Dies Werkzeugeinsätze sind auf ihrer Rückseite federbeaufschlagt, sodass sie sich beim Schließen des Werkzeuges leicht bewegen können und somit eine definierte Anpresskraft ausüben. Sie sind nach Schließung des Werkzeuges NICHT in ihrer Position verstellbar.

Der Erfindung liegt die Aufgabe zugrunde, ein neues Formwerkzeug der eingangs erwähnten Art zu schaffen, das eine exaktere Anspritzung der gespritzten Formteile an extrudierte Dichtungsstränge ermöglicht.

Das diese Aufgabe lösende Formwerkzeug nach der Erfindung ist dadurch gekennzeichnet, dass die Klemmfixiereinrichtungen zumindest ein innerhalb des Öffnungskanals auf den Endbereich einwirkendes Klemmbackenelement umfassen.

Die erfindungsgemäße Fixierung des Endbereichs innerhalb des Öffnungskanals wirkt sich vorteilhaft auf die Maßhaltigkeit des Spritzgussformteils sowie das Aussehen des Übergangs zwischen dem Spritzgussformteil und dem extrudierten Strangabschnitt aus.

Vorzugsweise ist das Klemmbackenelement mit einer Klemmfläche ausgestattet, die eine an den Endbereich angepasste Kontur aufweist. Durch die Konturanpassung werden bleibende Abdrücke der Klemmfläche des Klemmbackenelements im Elastomermaterial des extrudierten Strangabschnitts minimiert.

Das Klemmbackenelement kann den Endbereich z.B. bis zur Hälfte seines Umfangs umgreifen.

Insbesondere kann die in Bezug auf den Endbereich des Strangabschnitts radiale Position des Klemmbackenelements variiert werden. Alternativ können zur Verstellung austauschbare Klemmbackenelemente mit unterschiedlichen radialen Maßen vorgesehen sein.

In einer Ausführungsform wirkt das Klemmbackenelement von außen auf den Endbereich ein, wobei z.B. eine Schlauchwand eines schlauchförmig ausgebildeten Endbereichs des extrudierten Strangabschnitts zwischen dem Klemmbackenelement und einem Kernteil des Formwerkzeugs zur Anordnung kommt.

Alternativ oder zusätzlich kann ein Klemmbackenelement von innen gegen eine Schlauchwand andrücken und die Schlauchwand zwischen einer Außenwand des Öffnungskanals und dem Klemmbackenelement einklemmen.

Das Klemmbackenelement kann bündig oder im Abstand zu der Endstirnfläche des Dichtungsstrangs angeordnet sein.

Die Erfindung ist nachfolgend anhand von Ausführungsbeispielen und der beiliegenden, sich auf diese Ausführungsbeispiele beziehenden Zeichnungen weiter erläutert. Es zeigen:
- Fig. 1: ein mit Hilfe eines erfindungsgemäßen Formwerkzeugs hergestelltes Verbund-dichtungselement,
- Fig. 2: ein erfindungsgemäßen Formwerkzeug in schematischer Darstellung,
- Fig. 3: ein weiteres Ausführungsbeispiel für ein erfindungsgemäßes Formwerkzeug in schematischer Darstellung, und
- Fig. 4: eine Schnittdarstellung des Formwerkzeugs von Fig. 3.

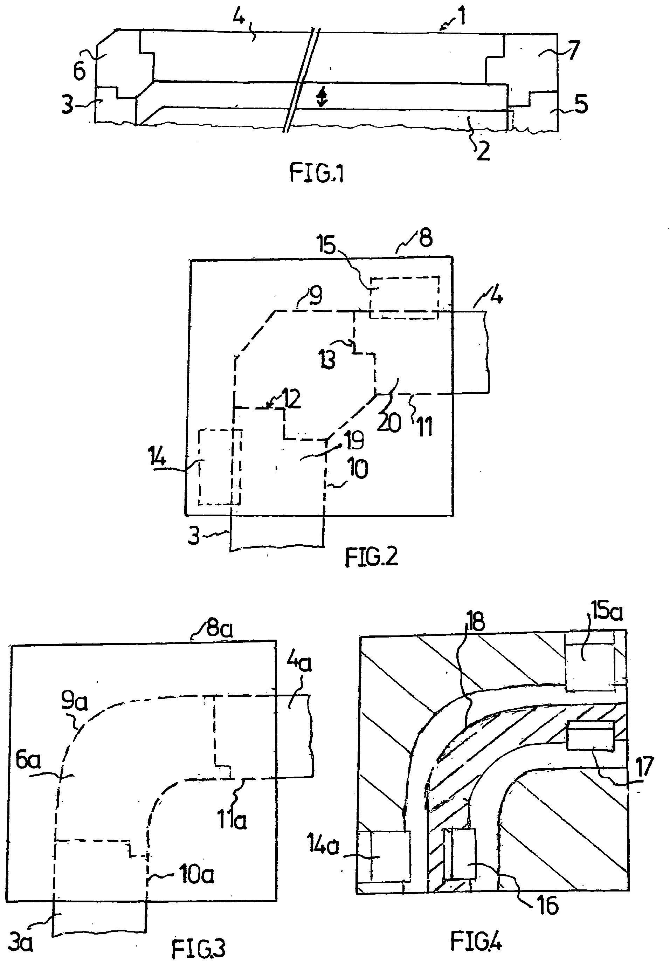

Ein in Fig. 1 gezeigtes Verbunddichtungselement 1 aus Elastomermaterial zur Führung und Abdichtung einer vertikal beweglichen Fahrzeugfensterscheibe umfasst extrudierte Dichtungsstrangabschnitte 3 bis 5 und im Spritzgießverfahren herstellte Dichtungsformteile 6 und 7. Die Strangabschnitte 3 bis 5 sind mit den Formteilen 6,7 durch Anspritzung der Formteile an die Strangabschnitte verbunden.

Zur Herstellung z.B. des Formteils 6 dient ein in Fig. 2 schematisch dargestelltes Formwerkzeug 8 mit einem der Form des Formteils 6 entsprechenden Formraum 9. In den Formraum 9 münden Öffnungskanäle 10 und 11, in die Endbereiche 19,20 der extrudierten Strangabschnitte 3,4 einführbar sind. Endstirnflächen 12 und 13 der Endbereiche 19,20 der Strangabschnitte 3,4 begrenzen jeweils den Formraum 9.

Bei den Öffnungskanälen 10,11 sind innerhalb des Formwerkzeugs 8 bewegbare Klemmbackenelemente 14,15 angeordnet. Die Klemmbackenelemente 14,15 lassen sich durch einen nicht gezeigten Verstellmechanismus verschieben, z.B. in einer Richtung senkrecht zur Extrusionsachse der extrudierten Strangabschnitte 3,4 oder auch in mehreren Richtungen. Alternativ können Sätze von Klemmbackenelementen 14,15 mit unterschiedlichen Abmessungen vorgesehen sein, die sich unter Austausch des jeweils vorhandenen Elements in das Formwerkzeug 8 einsetzen lassen.

Zum Spritzgießen des Formteils 6 werden die Endbereiche 19,20 der extrudierten Strangabschnitte 3,4 in die Öffnungskanäle 10,11 über eine vorgesehene Länge eingeführt, so dass sich die Endstirnflächen 12,13 in der für die vorgesehenen Abmessungen des Formteils 6 maßgebenden Position befinden. Es versteht sich, dass die Endstirnflächen 12,13 dem Druck des eingespritzten Elastomer- oder/und Thermoplastmaterials standhalten und ihre Position beibehalten müssen.

Infolge Toleranzschwankungen der Querschnittsmaße der extrudierten Strangabschnitte 3,4 können die eingeführten Endbereiche 19,20 in den Öffnungskanälen 10,11 unterschiedlich fest eingeklemmt sein oder darin sogar Spiel haben. Trotz Fixierung der Strangabschnitte 3,4 außerhalb des Werkzeugs 8 kann es daher zu unerwünschten Verschiebungen der Endstirnflächen 12,13 beim Einspritzen des Materials in den Formraum 9 kommen.

Abhängig von den jeweiligen Maßen der Strangabschnitte 3,4 können durch die Klemmbackenelemente 14,15 geeignete Klemmkräfte eingestellt werden, die für eine axiale Fixierung der Endbereich 19,20 der Strangabschnitte 3,4 in den Öffnungskanälen 10,11 und damit für eine stabile Lage der Endstirnflächen 12,13 sorgen.

Die Klemmbackenelemente 14,15 können bündig mit der Endstirnfläche 12 bzw. 13 abschließen oder geringfügig, z.B. um 1 mm, gegenüber der Endstirnfläche 12,13 zurückversetzt sein. Die Kontur der den Strangabschnitten 3,4 zugewandten Stempelflächen der Klemmbackenelemente 14,15 kann der Kontur der Strangabschnitte 3,4 angepasst sein, so dass die Strangabschnitte 3,4 im Querschnitt durch die Klemmung nicht oder nur geringfügig deformiert werden.

Die Figuren 3 und 4 zeigen ein Formwerkzeug 8a zur Erzeugung eines an extrudierte Strangabschnitte 3a und 4a angespritzten Formteils 6a, das wie die Strangabschnitte 3a,4a schlauchförmig ausgebildet ist. Die Schlauchteile der Strangabschnitte 3,4 gehen bündig in den Schlauchteil des Formteils 6a über.

Das Formwerkzeug 8a umfasst neben verstellbaren Klemmbackenelementen 14a und 15a weitere Klemmbackenelemente 16 und 17, die innerhalb eines in die extrudierten Strangabschnitte 3a,4a hineinragenden, die Schlauchinnenwand des Eckenteils 3a bildenden Werkzeugkernelements 18 angeordnet sind.

## Patentansprüche

1. Formwerkzeug zur Herstellung von Verbunddichtungselementen (1) unter Anspritzung eines Dichtungsformteils (6,7) an einen extrudierten Dichtungsstrangabschnitt (3-5), mit einem Formraum (9) und wenigstens einem in den Formraum mündenden Öffnungskanal (10,11), in den ein Endbereich (19,20) des extrudierten Dichtungsstrangabschnitts (3-5) unter Schließung des Formraums (9) einsetzbar ist, und mit Einrichtungen (14-17) zur Klemmfixierung des Dichtungsstrangabschnitts (3-5),
**dadurch gekennzeichnet,**
**dass** die Klemmfixiereinrichtungen zumindest ein innerhalb des Öffnungskanals (10,11) auf den Endbereich (19,20) einwirkendes, in seiner Position verstellbares Klemmbackenelement (14-17) umfassen.

2. Formwerkzeug nach Anspruch 1,
**dadurch gekennzeichnet,**
**dass** das Klemmbackenelement (14-17) eine an den Endbereich (19,20) angepasste Kontur aufweist.

3. Formwerkzeug nach Anspruch 1 oder 2,
**dadurch gekennzeichnet,**
**dass** das Klemmbackenelement (14-17) den Endbereich (19,20) über einen Teil seines Umfangs umgreift.

4. Formwerkzeug nach einem der Ansprüche 1 bis 3,
**dadurch gekennzeichnet,**
**dass** austauschbare Klemmbackenelemente (14-17) mit unterschiedlichen Abmessungen vorgesehen sind.

5. Formwerkzeug nach einem der Ansprüche 1 bis 4,
**dadurch gekennzeichnet,**
**dass** das Klemmbackenelement (14,15;14a,15a) von außen auf den Endbereich (19,20) einwirkt und z.B. die Schlauchwand eines schlauchförmigen Endbereichs (19,20) zwischen dem Klemmbackenelement (14,15; 14a,15a) und einem Werkzeugkernelement (18) des Formwerkzeugs (8) einklemmbar ist.

6. Formwerkzeug nach einem der Ansprüche 1 bis 5,
**dadurch gekennzeichnet,**
**dass** das Klemmbackenelement (16,17) von innen gegen die Schlauchwand eines schlauchförmigen Endbereichs (19,20) andrückt und z.B. die Schlauchwand zwischen dem Klemmbackenelement (16,17) und einer Außenwand des Öffnungskanals (11a,11a) einklemmbar ist.

7. Formwerkzeug nach einem der Ansprüche 1 bis 6,
**dadurch gekennzeichnet,**
**dass** das Klemmbackenelement (14-17) bündig oder im Abstand von der Endstirnfläche (12,13) des betreffenden extrudierten Dichtungsstrangabschnitts (3,4) angeordnet ist.

## Claims

1. Moulding tool for producing composite sealing elements (1) by injection-moulding a moulded sealing part (6, 7) onto an extruded sealing strand portion (3-5), with a mould cavity (9) and at least one opening channel (10, 11), which opens out into the mould cavity and into which an end region (19, 20) of the extruded sealing strand portion (3-5) can be inserted while closing the mould cavity (9), and with devices (14-17) for fixing the sealing strand portion (3-5) by clamping,
**characterized in that** the clamping fixing devices comprise at least one clamping jaw element (14-17), which acts on the end region (19, 20) within the opening channel (10, 11) and is adjustable in its position.

2. Moulding tool according to Claim 1,
**characterized**
**in that** the clamping jaw element (14-17) has a contour that is adapted to the end region (19, 20).

3. Moulding tool according to Claim 1 or 2, **characterized**
**in that** the clamping jaw element (14-17) reaches around the end region (19, 20) over part of its circumference.

4. Moulding tool according to one of Claims 1 to 3, **characterized**
**in that** exchangeable clamping jaw elements (14-17) with different dimensions are provided.

5. Moulding tool according to one of Claims 1 to 4, **characterized**
**in that** the clamping jaw element (14, 15; 14a, 15a) acts on the end region (19, 20) from the outside and, for example, the tube wall of a tubular end region (19, 20) can be clamped in between the clamping jaw element (14, 15; 14a, 15a) and a tool core element (18) of the moulding tool (8).

6. Moulding tool according to one of Claims 1 to 5, **characterized**
**in that** the clamping jaw element (16, 17) presses against the tube wall of a tubular end region (19, 20) from the inside and, for example, the tube wall can be clamped in between the clamping jaw element (16, 17) and an outer wall of the opening channel (10a, 11a).

7. Moulding tool according to one of Claims 1 to 6, **characterized**
**in that** the clamping jaw element (14-17) is arranged flush with or at a distance from the end face area (12, 13) of the extruded sealing strand portion (3, 4) concerned.

## Revendications

1. Outil de moulage pour la fabrication d'éléments d'étanchéité composites (1) par injection d'une pièce moulée d'étanchéité (6, 7) sur une section de brin d'étanchéité extrudé (3-5), présentant un espace de moulage (9) et au moins un canal d'ouverture (10, 11) débouchant dans l'espace de moulage, dans lequel canal d'ouverture peut être placée une zone d'extrémité (19, 20) de la section de brin d'étanchéité extrudé (3-5) avec fermeture de l'espace de moulage (9) et présentant des dispositifs (14-17) pour la fixation par serrage de la section de brin d'étanchéité (3-5), **caractérisé en ce que** les dispositifs de fixation par serrage comprennent au moins un élément de mâchoire de serrage (14-17), réglable en position, agissant dans le canal d'ouverture (10, 11) sur la zone d'extrémité (19, 20).

2. Outil de moulage selon la revendication 1, **caractérisé en ce que** l'élément de mâchoire de serrage (14-17) présente un contour adapté à la zone d'extrémité (19, 20).

3. Outil de moulage selon la revendication 1 ou 2, **caractérisé en ce que** l'élément de mâchoire de serrage (14-17) entoure la zone d'extrémité (19, 20) sur une partie de sa périphérie.

4. Outil de moulage selon l'une quelconque des revendications 1 à 3, **caractérisé en ce que** des éléments de mâchoire de serrage (14-17) remplaçables présentant diverses dimensions sont prévus.

5. Outil de moulage selon l'une quelconque des revendications 1 à 4, **caractérisé en ce que** l'élément de mâchoire de serrage (14, 15 ; 14a, 15a) agit depuis l'extérieur sur la zone d'extrémité (19, 20) et, par exemple, la paroi de tuyau d'une zone d'extrémité (19, 20) en forme de tuyau peut être enserrée entre l'élément de mâchoire de serrage (14, 15 ; 14a, 15a) et un élément de cœur d'outil (18) de l'outil de moulage (8).

6. Outil de moulage selon l'une quelconque des revendications 1 à 5, **caractérisé en ce que** l'élément de mâchoire de serrage (16, 17) pousse depuis l'intérieur contre la paroi de tuyau d'une zone d'extrémité (19, 20) en forme de tuyau et, par exemple, la paroi de tuyau peut être enserrée entre l'élément de mâchoire de serrage (16, 17) et une paroi externe du canal d'ouverture (10a, 11a).

7. Outil de moulage selon l'une quelconque des revendications 1 à 6, **caractérisé en ce que** l'élément de mâchoire de serrage (14-17) est disposé de manière affleurante ou à une certaine distance de la surface frontale d'extrémité (12, 13) de la section de brin d'étanchéité extrudé (3, 4) en question.
